# EUROPEAN PATENT APPLICATION

(11) **EP 4 801 140 A1**
(43) Date of publication of application: **02.09.2026**
(21) Application number: 24890331.2
(22) Date of filing: 20.09.2024
(51) Int. Cl.: H04W 72/04, H04W 76/19

(54) **COMMUNICATION METHOD AND APPARATUS**

(30) Priority: 17.11.2023 CN 202311548971
(71) Applicant: Huawei Technologies Co., Ltd., Shenzhen, Guangdong 518129 (CN)
(72) Inventor: QI, Hong, Shenzhen, Guangdong 518129 (CN); ZHANG, Yi, Shenzhen, Guangdong 518129 (CN); SU, Hongjia, Shenzhen, Guangdong 518129 (CN); LIU, Yating, Shenzhen, Guangdong 518129 (CN)
(74) Representative: Maiwald GmbH
(86) International application number: PCT/CN2024/120088
(87) International publication number: WO 2025/102973

(57) **Abstract**

This application discloses a communication method and apparatus, and is applicable to V2X, internet of vehicles, self-driving, and other fields. The method includes: after determining a beam failure, a first terminal apparatus sends beam failure recovery request information on a first resource in M resources, where the M resources are associated with M reference signals in a one-to-one manner, the first resource is determined from the M resources based on reception quality of the M reference signals, and the M resources are used to transmit the beam failure recovery request information; and the first terminal apparatus receives beam failure recovery response information on a second resource in N resources, where the N resources are used to transmit the beam failure recovery response information, the second resource is associated with at least two resources in the M resources, and the at least two resources include the first resource. In this way, resource overhead needed for beam failure recovery are reduced, and a proportion of resources that can be used for data transmission is increased.

## Description

### CROSS-REFERENCE TO RELATED APPLICATIONS

This application claims priority to Chinese Patent Application No. 202311548971.5, filed with the China National Intellectual Property Administration on November 17, 2023 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A 5th generation (5th generation, 5G) mobile communication system supports communication in a frequency range 2 (frequency range 2, FR2), that is, data is transmitted by using a high-frequency band signal. In the FR2, an anti-interference capability and penetration of signals are weak, and signal energy decreases sharply with increasing transmission distance. To overcome this problem, a beamforming technology is used in high-frequency communication.

After the beamforming technology is used, in a communication process between a transmit end and a receive end, a beam selected by the transmit end or the receive end may no longer be applicable. For example, link quality corresponding to the beam is poor. This situation is also referred to as a beam failure or a beam fault. When the transmit end or the receive end detects a beam failure, the transmit end or the receive end may request beam failure recovery (beam failure recovery, BFR), so that beams finally selected by the transmit end and the receive end are aligned, to ensure communication quality.

However, in a sidelink, how to implement beam failure recovery is an urgent problem to be resolved.

### SUMMARY

This application provides a communication method and apparatus, to reduce resource overhead needed for beam failure recovery in sidelink communication.

According to a first aspect, this application provides a communication method. The method is applicable to a scenario like V2X. The method is performed by a first terminal apparatus or a module in the first terminal apparatus. An example in which the method is performed by the first terminal apparatus is used for description. In the method, the first terminal apparatus determines a beam failure; the first terminal apparatus sends beam failure recovery request information to a second terminal apparatus on a first resource in M resources, where the M resources are associated with M reference signals in a one-to-one manner, the first resource is determined from the M resources based on reception quality of the M reference signals, and the M resources are used to transmit the beam failure recovery request information; the first terminal apparatus receives beam failure recovery response information from the second terminal apparatus on a second resource in N resources, where the N resources are used to transmit the beam failure recovery response information, the second resource is associated with at least two resources in the M resources, and the at least two resources include the first resource.

According to the foregoing method, because the second resource is associated with the at least two resources in the M resources, a quantity of beam failure recovery response resources can be reduced, resource overhead needed for beam failure recovery can be reduced, and a proportion of resources that can be used for data transmission is increased.

In a possible design, that the first terminal apparatus determines the beam failure includes: If the first terminal apparatus does not receive information periodically sent by the second terminal apparatus, the first terminal apparatus determines the beam failure; if the first terminal apparatus determines that a quantity of consecutive failures in receiving sidelink data reaches a first threshold, the first terminal apparatus determines the beam failure; or if the first terminal apparatus determines that a proportion of sidelink positive feedback to feedback that needs to be received is less than a second threshold, the first terminal apparatus determines the beam failure.

In a possible design, the method further includes: The first terminal apparatus communicates with the second terminal apparatus by using a beam associated with the first resource.

In a possible design, the second resource includes one symbol in time domain and one resource block in frequency domain.

In this way, a resource granularity of the second resource is small, so that resource overhead needed for beam failure recovery can be reduced, and a proportion of resources that can be used for data transmission is increased.

In a possible design, the method further includes: receiving first information from a network apparatus, where the first information indicates a resource block set used to transmit the beam failure recovery response information in a resource pool, and the N resources belong to the resource block set in frequency domain.

In this way, the network apparatus is used to configure the resource block set used to transmit the beam failure recovery response information, to improve flexibility of adjustment and control of the network apparatus.

In a possible design, the first information includes a bitmap, each bit position in the bitmap corresponds to one resource block in the resource pool, and a value of each bit position indicates whether the resource block corresponding to each bit position is used to transmit the beam failure recovery response information.

In a possible design, the method further includes: receiving second information from the network apparatus, where the second information indicates a slot set used to transmit the beam failure recovery response information in the resource pool, and the N resources belong to the slot set in time domain.

In this way, the network apparatus is used to configure the slot set used to transmit the beam failure recovery response information, to improve flexibility of adjustment and control of the network apparatus.

In a possible design, the second information includes a periodicity value, and there is an interval of K-1 slots between two adjacent slots in the slot set, where K is the periodicity value.

It should be noted that the network apparatus may separately send the first information and the second information, that is, separately configure a frequency domain resource and a time domain resource used to transmit the beam failure recovery response information. In another example, the network apparatus may also send fourth information, where the fourth information is used to configure a resource set used to transmit the beam failure recovery response information, and the fourth information includes information about a mapping relationship between positions and indexes of a plurality of resource elements.

In a possible design, the method further includes: receiving third information from the network apparatus, where the third information indicates an association relationship between the M resources and the N resources.

It should be noted that the first information, the second information, the third information, or the fourth information may be configured by the network apparatus, may be configured by a terminal apparatus (for example, the first terminal apparatus configures the information for the second terminal apparatus, the second terminal apparatus configures the information for the first terminal apparatus, or another terminal apparatus configures the information for the first terminal apparatus and the second terminal apparatus), may be preconfigured in the first terminal apparatus and the second terminal apparatus, or may be predefined in a protocol.

In a possible design, an association relationship between the M resources and the N resources is predefined or preconfigured.

In a possible design, the second resource is frequency-division multiplexed with a sidelink feedback resource.

In a possible design, the second resource and the sidelink feedback resource are located in different slots.

In a possible design, the second resource is located after the at least two resources in time domain.

According to a second aspect, this application provides a communication method. The method is applicable to a scenario like V2X. The method is performed by a second terminal apparatus or a module in the second terminal apparatus. An example in which the method is performed by the second terminal apparatus is used for description. In the method, the second terminal apparatus sends M reference signals; the second terminal apparatus receives, on a first resource in M resources, beam failure recovery request information from the second terminal apparatus, where the M resources are associated with the M reference signals in a one-to-one manner, the first resource is determined from the M resources based on reception quality of the M reference signals, and the M resources are used to transmit the beam failure recovery request information; the second terminal apparatus sends beam failure recovery response information to the second terminal apparatus on a second resource in N resources, where the N resources are used to transmit the beam failure recovery response information, the second resource is associated with at least two resources in the M resources, and the at least two resources include the first resource.

In a possible design, the method further includes: The second terminal apparatus communicates with the first terminal apparatus by using a beam associated with the first resource.

In a possible design, the second resource includes one symbol in time domain and one resource block in frequency domain.

In a possible design, the method further includes: receiving first information from a network apparatus, where the first information indicates a resource block set used to transmit the beam failure recovery response information in a resource pool, and the N resources belong to the resource block set in frequency domain.

In a possible design, the first information includes a bitmap, each bit position in the bitmap corresponds to one resource block in the resource pool, and a value of each bit position indicates whether the resource block corresponding to each bit position is used to transmit the beam failure recovery response information.

In a possible design, the method further includes: receiving second information from the network apparatus, where the second information indicates a slot set used to transmit the beam failure recovery response information in the resource pool, and the N resources belong to the slot set in time domain.

In a possible design, the second information includes a periodicity value, and there is an interval of K-1 slots between two adjacent slots in the slot set, where K is the periodicity value.

In a possible design, the method further includes: receiving third information from the network apparatus, where the third information indicates an association relationship between the M resources and the N resources.

In a possible design, an association relationship between the M resources and the N resources is predefined or preconfigured.

In a possible design, the second resource is frequency-division multiplexed with a sidelink feedback resource

In a possible design, the second resource and the sidelink feedback resource are located in different slots.

In a possible design, the second resource is located after the at least two resources in time domain.

It may be understood that the communication method provided in the second aspect corresponds to the first aspect. For beneficial effects of related technical features, refer to the descriptions of the first aspect.

According to a third aspect, this application provides a communication method. The method is applicable to a scenario like V2X. The method is performed by a second terminal apparatus or a module in the second terminal apparatus. An example in which the method is performed by the second terminal apparatus is used for description. In the method, the second terminal apparatus determines a beam failure; the second terminal apparatus sends beam failure recovery request information and a reference signal to a first terminal apparatus on each of M resources; and the second terminal apparatus receives, on a second resource, beam failure recovery response information from the first terminal apparatus, where the second resource is associated with a first resource in the M resources, and the first resource is determined by the first terminal apparatus from the M resources based on reception quality of a reference signal on the M resources.

According to the foregoing method, the second terminal apparatus may send the beam failure recovery request information and the reference signal on the M resources. Correspondingly, the first terminal apparatus may feed back the beam failure recovery response information on a corresponding beam failure recovery response resource based on reception quality of a plurality of reference signals, so that resource overhead needed for beam failure recovery can be reduced, and a proportion of resources that can be used for data transmission is increased.

In a possible design, that the second terminal apparatus determines the beam failure includes: If the second terminal apparatus determines that a quantity of consecutive failures in receiving sidelink feedback data reaches a third threshold, the second terminal apparatus determines the beam failure.

In a possible design, the method further includes: The second terminal apparatus communicates with the first terminal apparatus by using a beam associated with the first resource.

In a possible design, the method further includes: The second terminal apparatus determines a plurality of resources from a resource pool, where the plurality of resources are located in different slots.

In a possible design, resources associated with the M resources are located in different slots.

In a possible design, the first resource is further used to transmit sidelink data.

In this way, because the first resource may be further used to transmit the sidelink data, resource use flexibility can be improved, and a proportion of resources that can be used for data transmission is increased.

In a possible design, the beam failure recovery request information is carried on a physical sidelink control channel, or the beam failure recovery request information is carried on a physical sidelink shared channel.

In a possible design, the second resource is included in a physical sidelink feedback channel resource; or the second resource is dedicated to transmitting the beam failure recovery response information.

In a possible design, the second resource is located after the M resources in time domain.

In a possible design, an association relationship between the second resource and the first resource is configured by a network apparatus, preconfigured, or predefined.

According to a fourth aspect, this application provides a communication method. The method is applicable to a scenario like V2X. The method is performed by a first terminal apparatus or a module in the first terminal apparatus. An example in which the method is performed by the first terminal apparatus is used for description. In the method, the first terminal apparatus receives, on each of M resources, beam failure recovery request information and a reference signal from the first terminal apparatus; and the first terminal apparatus sends beam failure recovery response information to the first terminal apparatus on a second resource, where the second resource is associated with a first resource in the M resources, and the first resource is determined by the first terminal apparatus from the M resources based on reception quality of a reference signal on the M resources.

In a possible design, the method further includes: The first terminal apparatus communicates with the second terminal apparatus by using a beam associated with the first resource.

In a possible design, resources associated with the M resources are located in different slots.

In a possible design, the first resource is further used to transmit sidelink data.

In a possible design, the beam failure recovery request information is carried on a physical sidelink control channel, or the beam failure recovery request information is carried on a physical sidelink shared channel.

In a possible design, the second resource is included in a physical sidelink feedback channel resource; or the second resource is dedicated to transmitting the beam failure recovery response information.

In a possible design, the second resource is located after the M resources in time domain.

In a possible design, an association relationship between the second resource and the first resource is configured by a network apparatus, preconfigured, or predefined.

It may be understood that the communication method provided in the fourth aspect corresponds to the third aspect. For beneficial effects of related technical features, refer to the descriptions of the first aspect.

According to a fifth aspect, this application provides a communication apparatus. The communication apparatus has a function of implementing any one of the first aspect to the fourth aspect. For example, the communication apparatus includes a corresponding module, unit, or means for performing operations in any one of the first aspect to the fourth aspect. The function, the unit, or the means may be implemented by software, may be implemented by hardware, or may be implemented by hardware executing corresponding software.

In a possible design, the communication apparatus includes a processing unit and a communication unit. The communication unit may be configured to receive and send a signal, to implement communication between the communication apparatus and another apparatus. The processing unit may be configured to perform some internal operations of the communication apparatus. Functions performed by the processing unit and the communication unit may correspond to the operations in any one of the first aspect to the fourth aspect.

In a possible design, the communication apparatus includes a processor, and the processor may be configured to be coupled to a memory. The memory may store a computer program or instructions necessary for implementing the function in any one of the first aspect to the fourth aspect. The processor may execute the computer program or the instructions stored in the memory. When the computer program or the instructions are executed, the communication apparatus is caused to implement the method in any possible design or implementation of the first aspect to the fourth aspect.

In a possible design, the communication apparatus includes a processor and a memory, and the memory may store a computer program or instructions necessary for implementing the functions in any one of the first aspect to the fourth aspect. The processor may execute the computer program or the instructions stored in the memory. When the computer program or the instructions are executed, the communication apparatus is caused to implement the method in any possible design or implementation of the first aspect to the fourth aspect.

In a possible design, the communication apparatus includes a processor and an interface circuit. The processor is configured to communicate with another apparatus through the interface circuit, and perform the method in any possible design or implementation of the first aspect to the fourth aspect.

It may be understood that in the fifth aspect, the processor may be implemented by hardware, or may be implemented by software. When the processor is implemented by the hardware, the processor may be a logic circuit, an integrated circuit, or the like. When the processor is implemented by the software, the processor may be a general-purpose processor, and is implemented by reading software code stored in the memory. In addition, there may be one or more processors, and one or more memories. The memory may be integrated with the processor, or the memory and the processor are disposed separately. In a specific implementation process, the memory and the processor may be integrated into one chip, or may be disposed on different chips. A type of the memory and a manner in which the memory and the processor are disposed are not limited in embodiments of this application.

According to a sixth aspect, this application provides a computer-readable storage medium, where the computer storage medium stores computer-readable instructions, and when a computer reads and executes the computer-readable instructions, the computer is caused to perform the method according to any one of the possible designs of the first aspect to the fourth aspect.

For example, the computer-readable storage medium may be any usable medium that can be accessed by the computer. By way of example but not limitation, the computer-readable medium may include a non-transitory computer-readable medium, a random access memory (random access memory, RAM), a read-only memory (read-only memory, ROM), an electrically erasable programmable read-only memory (electrically EPROM, EEPROM), a CD-ROM or another optical disk storage, a magnetic disk storage medium or another magnetic storage device, or any other medium that can carry or store desired program code in a form of instructions or a data structure and that can be accessed by the computer.

According to a seventh aspect, this application provides a computer program product. When a computer reads and executes the computer program product, the computer is caused to perform the method according to any one of the possible designs of the first aspect to the fourth aspect.

According to an eighth aspect, this application provides a chip (or a chip system), where the chip includes a processor, and the processor is coupled to a memory, and is configured to read and execute a software program stored in the memory, to implement the method according to any one of the possible designs of the first aspect to the fourth aspect.

### BRIEF DESCRIPTION OF DRAWINGS

FIG. 1A, FIG. 1B, and FIG. 1C are diagrams of communication systems according to an embodiment of this application;
FIG. 2A is a diagram of a sidelink data resource according to an embodiment of this application;
FIG. 2B is a diagram of a sidelink feedback resource according to an embodiment of this application;
FIG. 3 is a diagram of a beam failure between a terminal apparatus A and a terminal apparatus B according to an embodiment of this application;
FIG. 4 is a diagram of resources on which reference signals are located, BFRQ resources, and BFRR resources according to an embodiment of this application;
FIG. 5 is a schematic flowchart corresponding to a communication method according to an embodiment of this application;
FIG. 6A is another diagram of resources on which reference signals are located, BFRQ resources, and BFRR resources according to an embodiment of this application;
FIG. 6B is another diagram of resources on which reference signals are located, BFRQ resources, and BFRR resources according to an embodiment of this application;
FIG. 7A is a diagram of BFRR resources according to an embodiment of this application;
FIG. 7B is a diagram of BFRR resource configuration periodicities according to an embodiment of this application;
FIG. 7C is a diagram of association relationships between BFRQ resources and BFRR resources according to an embodiment of this application;
FIG. 8 is another schematic flowchart corresponding to a communication method according to an embodiment of this application;
FIG. 9 is a diagram of BFRQ resources and BFRR resources according to an embodiment of this application;
FIG. 10 is a possible example block diagram of an apparatus according to an embodiment of this application;
FIG. 11 is a diagram of a structure of a communication apparatus according to an embodiment of this application; and
FIG. 12 is a diagram of a structure of a communication apparatus according to an embodiment of this application.

### DESCRIPTION OF EMBODIMENTS

The following describes the technical solutions in embodiments of this application with reference to the accompanying drawings in embodiments of this application. The technical solutions in embodiments of this application may be applied to various communication systems, for example, a universal mobile telecommunications system (universal mobile telecommunications system, UMTS), a wireless local area network (wireless local area network, WLAN), a wireless fidelity (wireless fidelity, Wi-Fi) system, a 4th generation (4th generation, 4G) mobile communication system, for example, a long term evolution (long term evolution, LTE) system, a 5G mobile communication system, for example, a new radio (new radio, NR) system, and a future evolved communication system, for example, a 6th generation (6th generation, 6G) mobile communication system.

In particular, the technical solutions in embodiments of this application may be further applied to vehicle-to-everything (vehicle-to-everything, V2X) communication, cellular vehicle-to-everything (cellular vehicle-to-everything, C-V2X) communication, internet of vehicles, self-driving, assisted driving, and other fields. C-V2X is a V2X communication technology developed based on a cellular system. C-V2X uses and enhances functions and elements of a current cellular network, to implement low-latency and high-reliability communication between various nodes in a vehicle network, including vehicle-to-vehicle (vehicle-to-vehicle, V2V) communication, vehicle-to-pedestrian (vehicle-to-pedestrian, V2P) communication, vehicle-to-infrastructure (vehicle-to-infrastructure, V2I) communication, and vehicle-to-network (vehicle-to-network, V2N) communication. With the evolution of the cellular system from 4G LTE to 5G NR, C-V2X also evolves from LTE-V2X to NR-V2X.

All aspects, embodiments, or features are presented in this application by describing a system that may include a plurality of devices, components, modules, and the like. It should be appreciated and understood that each system may include another device, component, module, and the like, and/or may not include all devices, components, modules, and the like discussed with reference to the accompanying drawings. In addition, a combination of these solutions may be used. In addition, in embodiments of this application, terms such as "example" and "for example" are used to give an example, an illustration, or a description. Any embodiment or design scheme described as an "example" in this application should not be explained as being more preferred or having more advantages than another embodiment or design scheme. Exactly, the term "example" is used to present a concept in a specific manner.

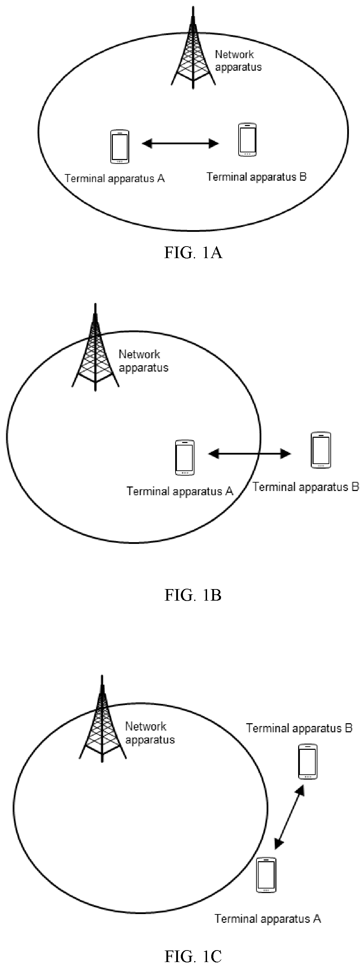

For ease of understanding embodiments of this application, communication systems shown in FIG. 1A to FIG. 1C are first used as an example to describe in detail a communication system applicable to embodiments of this application. This application is applicable to a communication system that supports sidelink communication, and supports communication scenarios with and without network coverage. A sidelink may also be referred to as a side link, and is referred to as a sidelink in this application.

As shown in FIG. 1A to FIG. 1C, the communication systems each may include a plurality of terminal apparatuses (for example, a terminal apparatus A and a terminal apparatus B), and optionally, further include a network apparatus. In FIG. 1A, both the terminal apparatus A and the terminal apparatus B are in signal coverage of the network apparatus. In FIG. 1B, the terminal apparatus A is in signal coverage of the network apparatus, but the terminal apparatus B is outside signal coverage of the network apparatus. In FIG. 1C, both the terminal apparatus A and the terminal apparatus B are outside signal coverage of the network apparatus. The terminal apparatus A and the terminal apparatus B in FIG. 1A and FIG. 1B may communicate with each other through the sidelink by using a resource scheduled by the network apparatus, and the resource may be a licensed resource or a licensed frequency band. Alternatively, the terminal apparatus A and the terminal apparatus B may perform resource self-selection, that is, select, from a resource pool, a resource used for sidelink communication, and the resource is an unlicensed resource or an unlicensed frequency band. Both the terminal apparatus A and the terminal apparatus B in FIG. 1C are outside signal coverage of the network apparatus, and therefore can communicate with each other only through the sidelink in a resource self-selection manner.

The following separately describes the network apparatus and the terminal apparatus in FIG. 1A to FIG. 1C.

### (1) Network apparatus

In embodiments of this application, the network apparatus may also be referred to as a network device, and the network apparatus may be a device in a wireless network. For example, the network apparatus may be a radio access network (radio access network, RAN) node that connects a terminal device to the wireless network, and may also be referred to as an access network device. The network apparatus includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB or a home NodeB, HNB), a baseband unit (baseband unit, BBU), an access point (access point, AP) in a wireless fidelity (wireless fidelity, Wi-Fi) system, a radio relay node, a wireless backhaul node, a transmission point (transmission point, TP), a transmission reception point (transmission reception point, TRP), or the like; or may be a network apparatus in a 5G mobile communication system, for example, a next generation NodeB (next generation NodeB, gNB), a transmission reception point (transmission reception point, TRP) or a TP in an NR system, or one antenna panel or a group (including a plurality of antenna panels) of antenna panels of a base station in the 5G mobile communication system. Alternatively, the network apparatus may be a network node that constitutes a gNB or a transmission point, for example, a BBU or a distributed unit (distributed unit, DU).

In some deployments, the gNB may include a central unit (central unit, CU) and a DU. The gNB may further include an active antenna unit (active antenna unit, AAU). The CU implements some functions of the gNB, and the DU implements some functions of the gNB. For example, the CU is responsible for processing a non-real-time protocol and service, and implements functions of a radio resource control (radio resource control, RRC) layer and a packet data convergence protocol (packet data convergence protocol, PDCP) layer. The DU is responsible for processing a physical layer protocol and a real-time service, and implements functions of a radio link control (radio link control, RLC) layer, a medium access control (medium access control, MAC) layer, and a physical (physical, PHY) layer. The AAU implements some physical layer processing functions, radio frequency processing, and a function related to an active antenna. Information at the RRC layer is finally changed to information at the PHY layer, or is changed from information at the PHY layer. Therefore, in this architecture, high-layer signaling (for example, RRC layer signaling) may also be considered to be sent by the DU, or sent by the DU and the AAU. It may be understood that the network apparatus may be a device including one or more of a CU node, a DU node, and an AAU node. In addition, the CU may be classified as a network device in a RAN, or the CU may be classified as a network apparatus in a core network (core network, CN). This is not limited in this application.

### (2) Terminal apparatus

The terminal apparatus in embodiments of this application may be a wireless terminal apparatus that can receive scheduling and indication information from a network apparatus. The terminal apparatus may be a terminal device, or may be user equipment (user equipment, UE), a mobile station (mobile station, MS), a mobile terminal (mobile terminal, MT), or the like. The terminal apparatus may be a device that includes a wireless communication function (providing voice/data connectivity to a user), for example, a handheld device, a vehicle-mounted device, or a vehicle-mounted module that has a wireless connection function. Currently, some examples of the terminal apparatus are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in an internet of vehicles, a wireless terminal in self-driving (self-driving), a wireless terminal in remote medical surgery (remote medical surgery), a wireless terminal in smart grid (smart grid), a wireless terminal in transportation security (transportation safety), a wireless terminal in smart city (smart city) or a wireless terminal in smart home (smart home), a device-to-device (device-to-device, D2D) communication terminal apparatus, a vehicle-to-everything (vehicle-to-everything, V2X) communication terminal apparatus, an intelligent vehicle, an in-vehicle infotainment system (or referred to as a vehicle-mounted sending unit) (telematics box, T-box), a machine-to-machine/machine-type communication (machine-to-machine/machine-type communication, M2M/MTC) terminal apparatus, an internet of things (internet of things, IoT) terminal apparatus, and the like. For example, the terminal apparatus may be a vehicle-mounted device, an entire vehicle device, a vehicle-mounted module, a vehicle, an on-board unit (on-board unit, OBU), a roadside unit (roadside unit, RSU), a T-box, a chip, or a system-on-a-chip (system-on-a-chip, SoC). The chip or the SoC may be mounted in a vehicle, an OBU, an RSU, or a T-box. The wireless terminal in the industrial control may be a camera, a robot, or the like. The wireless terminal in the smart home may be a television, an air conditioner, a sweeper robot, a speaker, a set-top box, or the like. The terminal device may alternatively be a V2X device, for example, a smart car (smart car or intelligent car), a digital car (digital car), an unmanned car (unmanned car, driverless car, pilotless car, or automobile), a self-driving car (self-driving car or autonomous car), a pure electric vehicle (pure EV or battery EV), a hybrid electric vehicle (hybrid electric vehicle, HEV), a range extended electric vehicle (range extended EV, REEV), a plug-in hybrid electric vehicle (plug-in HEV, PHEV), a new energy vehicle (new energy vehicle), or a roadside unit (roadside unit, RSU). The terminal device may alternatively be a device in device-to-device (device-to-device, D2D) communication, for example, an electricity meter or a water meter. In addition, in embodiments of this application, the terminal device may alternatively be a terminal device in an IoT system. IoT is an important part of future development of information technologies. A main technical feature of IoT is connecting a thing to a network through a communication technology, to implement an intelligent network for interconnection between a person and a machine or between one thing and another.

In this application, "predefined" information is usually defined in a standard, does not need to be configured by another device, and is information recorded/written in advance in hardware and/or software of the terminal apparatus, or may be understood as information that cannot be changed by the network apparatus or another terminal apparatus.

In this application, "configuration" means that the network apparatus or a server sends configuration information of some parameters or parameter values to the terminal apparatus by using a message or signaling, or another terminal apparatus sends configuration information of some parameters or parameter values to the terminal apparatus by using a message or signaling, so that the terminal apparatus determines a communication parameter or a transmission resource based on the values or the information.

In this application, "pre-configuration" is similar to "configuration". "Pre-configuration" may be a manner in which the network apparatus or the server sends parameter information or a value to the terminal apparatus by using another link or carrier that is different from a sidelink, or may be a manner in which a corresponding parameter or parameter value is defined, or a manner in which a related parameter or value is written into the terminal apparatus in advance. This is not limited in this application. Further, these values and parameters may be changed or updated.

A communication system and a scenario described in embodiments of this application are intended to describe the technical solutions in embodiments of this application more clearly, and does not constitute a limitation on the technical solutions provided in embodiments of this application. A person of ordinary skill in the art may learn that, with evolution of network architectures and emergence of new scenarios, the technical solutions provided in embodiments of this application are also applicable to similar technical problems.

The following first explains and describes related terms in embodiments of this application. Unless otherwise specified, these explanations are intended to support meanings of related terms, for ease of understanding of embodiments of this application, and should not be considered as a strict limitation on related terms in the protection scope claimed in this application.

### (1) Sidelink communication

A time-frequency resource for sidelink communication is configured by using a sidelink resource pool, and the sidelink resource pool may also be referred to as a resource pool for short. The resource pool may be considered as a set of time domain resources and frequency domain resources used for sidelink communication. The resource pool may be located on a carrier, or may be located on a bandwidth part (bandwidth part, BWP) of a carrier. For example, one or more resource pools may be configured on one carrier (or a BWP of one carrier).

Information transmitted by using a sidelink may be referred to as sidelink information or side link information. For example, the sidelink information may include sidelink data and/or sidelink feedback data. The sidelink feedback data may be physical-layer hybrid automatic repeat request (hybrid automatic repeat request, HARQ) feedback data, for example, acknowledgment (acknowledgment, ACK)/negative acknowledgment (negative acknowledgment, NACK).

The sidelink data may be carried on a physical sidelink shared channel (physical sidelink shared channel, PSSCH) and/or a physical layer sidelink control channel (physical sidelink control channel, PSCCH). For example, one piece of sidelink data may refer to one PSSCH and/or PSCCH transmission (a PSSCH/PSCCH transmission). The sidelink feedback data may be carried on a physical sidelink feedback channel (physical sidelink feedback channel, PSFCH). For example, one piece of sidelink feedback data may refer to one PSFCH transmission (a PSFCH transmission).

### (2) Sidelink data resource and sidelink feedback resource

A resource used to transmit sidelink data may be referred to as a sidelink data resource or a PSSCH-PSCCH resource. The sidelink data resource includes one or more symbols in time domain and one or more sub-channels in frequency domain, and each sub-channel includes several resource blocks (resource block, RB). A resource used to transmit sidelink feedback data may be referred to as a sidelink data feedback resource or a PSFCH resource. The sidelink data feedback resource includes one or more symbols in time domain and one RB in frequency domain.

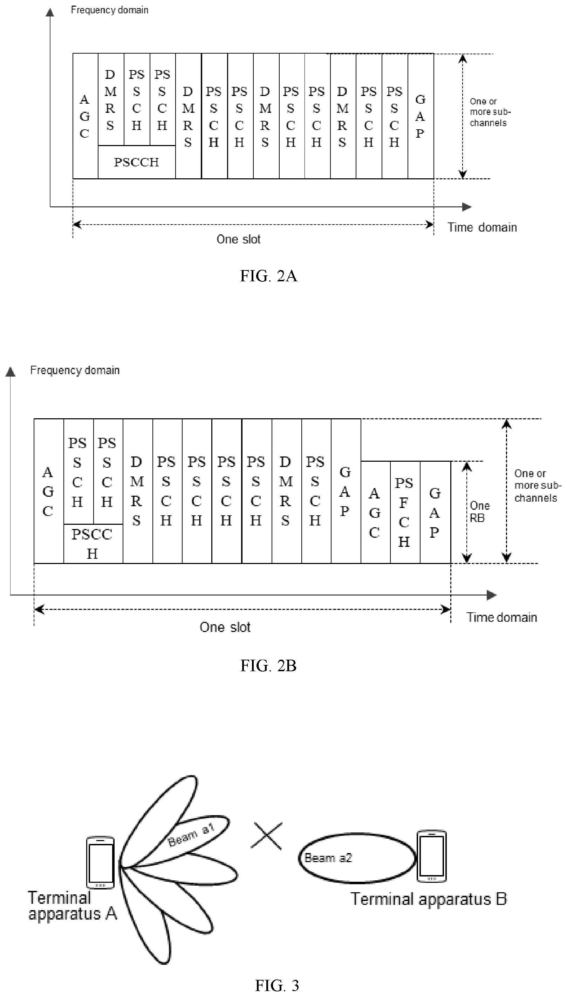

The following describes examples of the sidelink data resource and the sidelink feedback resource with reference to FIG. 2A and FIG. 2B. In FIG. 2A and FIG. 2B, an example in which one slot includes 14 symbols is used for illustration. A 1st symbol is an automatic gain control (automatic gain control, AGC) symbol used for AGC adjustment, and a last symbol is a guard symbol (guard period, GAP).

FIG. 2A is a diagram of a sidelink data resource. As shown in FIG. 2A, from a perspective of time domain, the sidelink data resource includes one slot (14 symbols). Specifically, the slot includes three PSCCH symbols and 12 PSSCH symbols, and the three PSCCH symbols and the three PSSCH symbols are transmitted in a frequency division manner. The 12 PSSCH symbols include four PSSCH reference signal symbols, and the PSSCH reference signal is, for example, a demodulation reference signal (demodulation reference signal, DMRS).

FIG. 2B is a diagram of a sidelink feedback resource. As shown in FIG. 2B, from a perspective of time domain, the sidelink feedback resource includes last three symbols of a slot, that is, one AGC symbol, one PSFCH symbol, and one GAP symbol. Optionally, the slot further includes a sidelink data resource, and the sidelink data resource includes first 11 symbols in the slot, that is, one AGC symbol, two PSCCH symbols, and nine PSSCH symbols. The nine PSSCH symbols include two PSSCH reference signal symbols, and the two PSCCH symbols and the two PSSCH symbols are transmitted in a frequency division manner.

It may be understood that the foregoing is described by using an example in which "the sidelink feedback resource includes three symbols (an AGC symbol, a PSFCH symbol, and a GAP symbol) in time domain", or may be described as follows: The sidelink feedback resource includes one symbol, that is, the sidelink feedback resource includes a PSFCH symbol, but does not include an AGC symbol or a GAP symbol. In the following embodiments of this application, an example in which "the sidelink feedback resource includes one symbol" is used for description.

In addition, in a V2X transmission mode 2 (mode 2) scenario, different from scheduling by the network apparatus, the terminal apparatus needs to independently select a sidelink data resource based on a listening result of the terminal apparatus. Therefore, to simplify a process of selecting a sidelink feedback resource, an association relationship between the sidelink data resource and the sidelink feedback resource is configured in NR-V2X. For example, if a sidelink data resource 1 is associated with a sidelink feedback resource 1, after the terminal apparatus A sends sidelink data to the terminal apparatus B on the sidelink data resource 1, the terminal apparatus B may send sidelink feedback data to the terminal apparatus A on the sidelink feedback resource 1. The sidelink feedback data indicates whether the sidelink data is successfully received.

### (3) Beam failure recovery

Beam management (beam management) is an important technology proposed for an FR2 in a 5G system, and is a process of obtaining and maintaining a beam set used for sending and receiving between a network apparatus and a terminal apparatus in the 5G system. The beam management includes two important functions: beam training and beam failure recovery. The beam failure recovery is a process in which after detecting, according to a beam failure detection criterion configured by the network apparatus, a failure of a serving beam, the terminal apparatus attempts to replace the serving beam with an available candidate beam, so that a transmit and receive beam pair becomes available again.

It should be noted that a beam used by a transmit end to send a signal may be referred to as a transmit beam, a beam used by a receive end to receive the signal may be referred to as a receive beam, and the transmit beam and the receive beam are a beam pair. In this embodiment of this application, the transmit beam and the receive beam may not be clearly distinguished. For example, a transmit beam x1 and a receive beam x2 may be collectively referred to as a beam x. In this way, it may be understood that the transmit end sends a signal by using the beam x, and correspondingly, the receive end may receive the signal by using the beam x.

For sidelink communication, when a resource for sidelink communication is located on an FR2 frequency band, beam failure recovery also needs to be performed when a beam failure occurs between two terminal apparatuses that perform sidelink communication. For example, as shown in FIG. 3, the two terminal apparatuses are respectively a terminal apparatus A and a terminal apparatus B. The terminal apparatus A sends information to the terminal apparatus B by using a beam a1, and correspondingly, the terminal apparatus B receives the information by using a beam a2. Then, because quality of a link between the beam a1 and the beam a2 deteriorates (for example, there is a blockage between the transmit beam a1 and the receive beam a2), a beam failure occurs between the terminal apparatus A and the terminal apparatus B. In this case, the terminal apparatus A and the terminal apparatus B need to perform beam failure recovery.

For example, a network apparatus may separately configure an association relationship between a reference signal, a beam, a beam failure recovery request (beam failure recovery request, BFRQ) resource, and a beam failure recovery response (beam failure recovery response, BFRR) resource for the terminal apparatus A and the terminal apparatus B; or an association relationship between a reference signal, a beam, a BFRQ resource, and a BFRR resource is preconfigured or predefined. The reference signal may be a channel state information reference signal (channel state information reference signal, CSI-RS) or another possible reference signal. This is not specifically limited. Table 1 shows an example of association relationships between reference signals, beams, BFRQ resources, and BFRR resources.

**Table 1: Example of the association relationships between the reference signals, the beams, the BFRQ resources, and the BFRR resources**

| Reference signal (or a resource on which the reference signal is located) | Beam | BFRQ resource | BFRR resource |
|---|---|---|---|
| Reference signal 1/Resource on which the reference signal 1 is located | Beam 1 | BFRQ resource 1 | BFRR resource 1 |
| Reference signal 2/Resource on which the reference signal 2 is located | Beam 2 | BFRQ resource 2 | BFRR resource 2 |

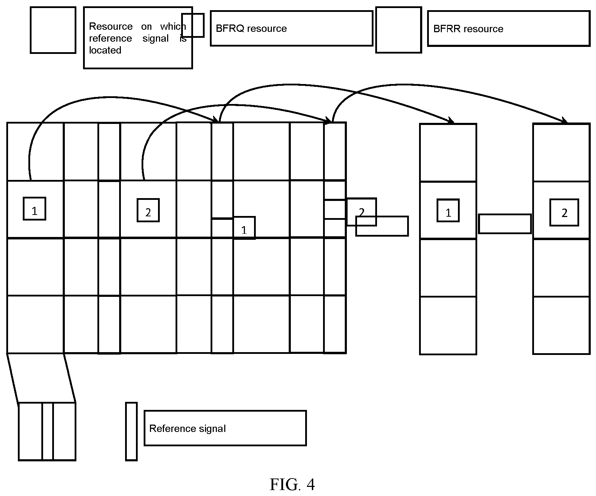

In Table 1, the reference signal 1, the beam 1, the BFRQ resource 1, and the BFRR resource 1 are associated with each other, and the reference signal 2, the beam 2, the BFRQ resource 2, and the BFRR resource 2 are associated with each other. Positions of resources on which reference signals are located, BFRQ resources, and BFRR resources may be shown in FIG. 4. The resource on which the reference signal is located may also be referred to as a resource used to send the reference signal. "Association" may also be referred to as "mapping", "correlation", or "corresponding".

For example, a resource granularity of the resource on which the reference signal is located may be the same as a resource granularity of a sidelink data resource. For example, the resource on which the reference signal is located includes one slot in time domain and one or more sub-channels in frequency domain. The transmit end may send the reference signal on some symbols in the resource (as shown in FIG. 4), and may send the sidelink data on symbols other than the symbols, or may not send the sidelink data. This is not limited in this embodiment of this application. A resource granularity of the BFRQ resource may be the same as a resource granularity of a sidelink feedback resource. For example, the BFRQ resource includes one symbol in time domain and one or more sub-channels in frequency domain. BFRQ information may be transmitted through a PSFCH. A resource granularity of the BFRR resource may be the same as a resource granularity of a sidelink data resource. For example, the BFRR resource includes one slot in time domain and one or more sub-channels in frequency domain. BFRR information may be transmitted through a PSSCH or a PCSCH.

Based on the association relationships shown in Table 1, a possible implementation of beam failure recovery on a sidelink includes:

### ① Beam failure detection

In a communication process between the terminal apparatus A and the terminal apparatus B, the terminal apparatus B may determine whether a beam failure occurs, and if the terminal apparatus B determines that the beam failure occurs, the terminal apparatus B may request beam failure recovery.

### ② New beam identification

The terminal apparatus A sends a plurality of reference signals on a plurality of resources based on association relationships between a plurality of reference signals and a plurality of beams by using a plurality of beams. For example, the terminal apparatus A sends a reference signal 1 on a resource 1 by using a beam 1, and sends a reference signal 2 on a resource 2 by using a beam 2. It may be understood that the plurality of beams may include the beam a.

Correspondingly, the terminal apparatus B determines an optimal beam from the plurality of beams based on reception quality of the plurality of received reference signals. For example, the plurality of reference signals include the reference signal 1 and the reference signal 2. If reception quality of the reference signal 2 is the highest, the terminal apparatus B may use a beam (that is, the beam 2) associated with the reference signal 2 as the optimal beam. The reception quality of the reference signal may be reference signal received power (reference signal received power, RSRP).

It may be understood that step ① may be performed before step ②, step ① may be performed after step ②, or step ① and step ② may be performed simultaneously.

③ The terminal apparatus B sends the BFRQ information to the terminal apparatus A, and correspondingly, the terminal apparatus A receives the BFRQ information from the terminal apparatus B.

The terminal apparatus B sends the BFRQ information on a BFRQ resource (that is, the BFRQ resource 1) associated with the optimal beam (that is, the beam 2). Correspondingly, the terminal apparatus A attempts to receive the BFRQ information on each BFRQ resource by using a beam associated with the terminal apparatus A. For example, the terminal apparatus A attempts to receive the BFRQ information on the BFRQ resource 1 by using the beam 1, and attempts to receive the BFRQ information on the BFRQ resource 2 by using the beam 2. When the terminal apparatus A receives the BFRQ information on the BFRQ resource 2 by using the beam 2, the terminal apparatus A determines that the beam 2 is the optimal beam.

④ The terminal apparatus A sends the BFRR information to the terminal apparatus B, and correspondingly, the terminal apparatus B receives the BFRR information from the terminal apparatus A.

The terminal apparatus A sends the BFRR information on a BFRR resource (that is, the BFRR resource 2) associated with the optimal beam (that is, the beam 2). Correspondingly, after receiving the BFRR information on the BFRR resource 2 by using the beam 2, the terminal apparatus B may determine that beam recovery succeeds. Subsequently, the terminal apparatus A and the terminal apparatus B may communicate with each other by using the beam 2.

It can be learned from the foregoing descriptions of beam failure recovery in sidelink communication that the reference signal, the BFRQ resource, and the BFRR resource are associated with each other in a one-to-one manner, that is, a quantity of required BFRQ resources and a quantity of required BFRR resources are equal to a quantity of beams. Because the BFRQ resource and the BFRR resource are configured by the network apparatus, preconfigured, or predefined, and usually cannot be used to transmit other information, resource overhead needed for beam failure recovery in sidelink communication are large.

Based on this, embodiments of this application provide a communication method, to reduce resource overhead needed for beam failure recovery in sidelink communication.

The following describes in detail the solutions provided in embodiments of this application. The solutions provided in embodiments of this application relate to a first terminal apparatus and a second terminal apparatus, and optionally, further relate to a network apparatus. The first terminal apparatus and the second terminal apparatus communicate with each other through a sidelink resource. Unless otherwise specified, the "terminal apparatus" may be a terminal device, or may be a component in the terminal device, for example, a chip or a chip system, and the "network apparatus" may be a network device, for example, a base station, or may be a component in the network device, for example, a chip or a chip system.

### Embodiment 1

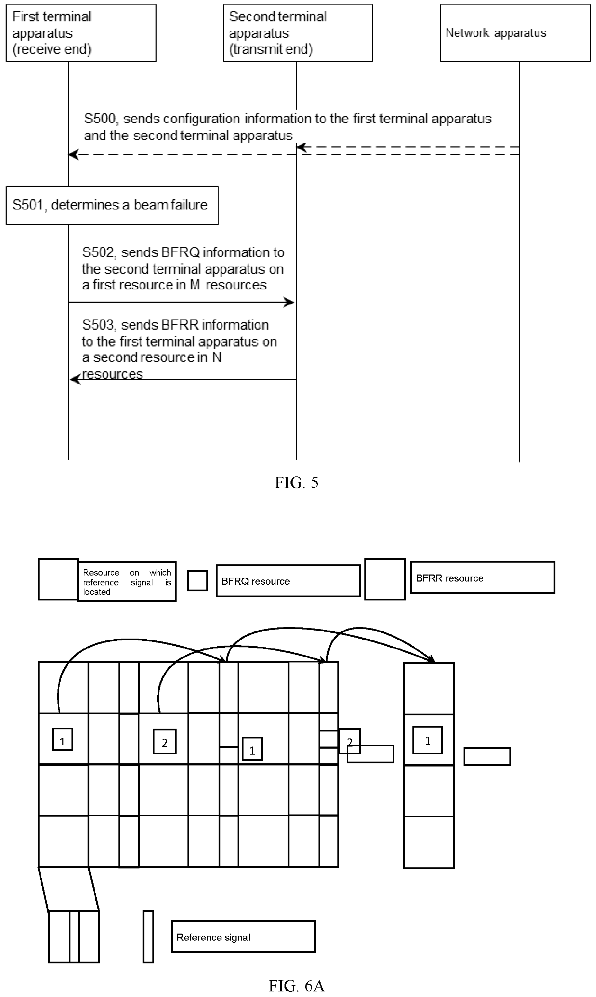

FIG. 5 is a schematic flowchart corresponding to a communication method according to an embodiment of this application. As shown in FIG. 5, the method includes the following steps.

S500: A network apparatus separately sends configuration information to a first terminal apparatus and a second terminal apparatus, and correspondingly, the first terminal apparatus and the second terminal apparatus determine an association relationship between M reference signals, M beams, M resources, and N resources based on the configuration information.

The M resources are used to transmit BFRQ information, that is, the M resources may be referred to as M BFRQ resources; and the N resources are used to transmit BFRR information, that is, the N resources may be referred to as N BFRR resources. M is an integer greater than 1, N is an integer greater than or equal to 1, and N is less than M. The association relationship between the M reference signals, the M beams, the M resources, and the N resources may be as follows: The M reference signals are associated with the M beams in a one-to-one manner, the M beams are associated with the M resources in a one-to-one manner, and each of the N resources is associated with at least one resource in the M resources.

Table 2 shows an example of association relationships between the M reference signals, the M beams, the M resources, and the N resources, where M=2 and N=1.

**Table 2: Example of the association relationships between the M reference signals, the M beams, the M resources, and the N resources**

| M reference signals (or resources on which the reference signals are located) | M beams | M resources | N resources |
|---|---|---|---|
| Reference signal 1/Resource on which the reference signal 1 is located | Beam 1 | BFRQ resource 1 | BFRR resource 1 |
| Reference signal 2/Resource on which the reference signal 2 is located | Beam 2 | BFRQ resource 2 | BFRR resource 1 |

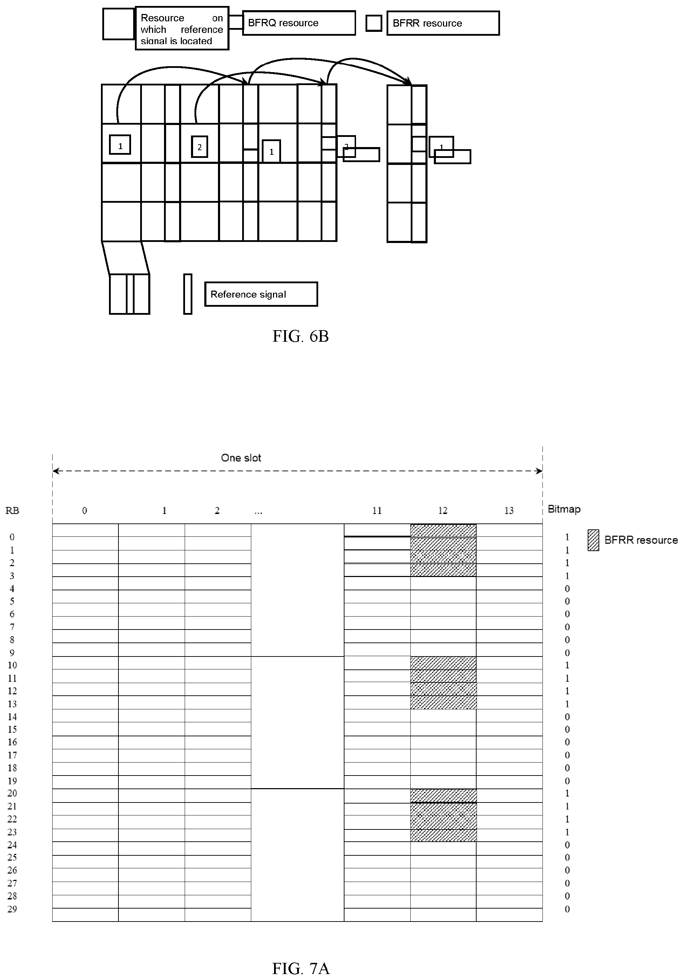

In Table 2, the reference signal 1, the beam 1, the BFRQ resource 1, and the BFRR resource 1 are associated with each other, and the reference signal 2, the beam 2, the BFRQ resource 2, and the BFRR resource 1 are associated with each other. Positions of resources on which reference signals are located, BFRQ resources, and a BFRR resource may be shown in FIG. 6A or FIG. 6B. It may be understood that Table 2 is described by using an example in which the M BFRQ resources are associated with a same BFRR resource. This embodiment of this application is not limited thereto. For example, the M BFRQ resources include a BFRQ resource 1 to a BFRQ resource 5 (that is, M=5), the N BFRR resources include a BFRR resource 1 and a BFRQ resource 2 (that is, N=2), the BFRQ resource 1 to the BFRQ resource 3 are associated with the BFRR resource 1, and the BFRQ resource 4 and the BFRQ resource 5 are associated with the BFRR resource 2.

For a resource granularity of the resource on which the reference signal is located and a resource granularity of the BFRQ resource, refer to the foregoing descriptions. For the BFRR resource, in a possible implementation, a resource granularity of the BFRR resource is the same as a resource granularity of a sidelink data resource. For example, the BFRR resource includes one slot in time domain and one or more sub-channels in frequency domain, as shown in FIG. 6A. In another possible implementation, considering that the BFRR information indicates that the BFRQ information has been received, that is, an information amount of the BFRR information is small, for example, may be 1-bit information, the resource granularity of the BFRR resource may be the same as a resource granularity of a sidelink feedback resource. For example, the BFRR resource includes one symbol in time domain (where a symbol preceding the symbol is an AGC symbol, and a symbol following the symbol is a GAP symbol) and one resource block in frequency domain, as shown in FIG. 6B. In this case, the BFRR information may be transmitted through a PSFCH. The following uses an example in which "the BFRR resource includes one symbol in time domain and one resource block in frequency domain" for description.

For example, the configuration information includes at least one of the following: first information, second information, and third information. The "configuration information" may also be replaced with "indication information". The network apparatus sends the configuration information in a plurality of manners, and the configuration information is carried in an RRC message or another possible message. The first information, the second information, and the third information may be carried in a same message or different messages. This is not specifically limited.

The following separately describes the first information, the second information, and the third information.

### (1) First information

The first information indicates a resource block set (that is, a BFRR frequency domain resource) used to transmit the BFRR information in a resource pool, and the N BFRR resources belong to the resource block set in frequency domain.

For example, the first information includes a bitmap (bitmap), and a quantity of bit positions in the bitmap is equal to a quantity of resource blocks in the resource pool. Each bit position in the bitmap corresponds to one resource block in the resource pool, and a value of each bit position indicates whether the resource block corresponding to the bit position is used to transmit the BFRR information. For example, "1" in the bitmap indicates that a corresponding resource block may be used to transmit the BFRR information (that is, may be used as the BFRR frequency domain resource), and "0" in the bitmap indicates that a corresponding resource block may not be used to transmit the BFRR information (that is, may not be used as the BFRR frequency domain resource).

As shown in FIG. 7A, in one slot, assuming that one sub-channel includes 10 resource blocks, and the resource pool includes three sub-channels in total, the bitmap may include 3*10=30 bit positions. If the bitmap shown in FIG. 7A is 111100000011110000001111000000, it indicates that first four resource blocks of each sub-channel in the resource pool may be used to transmit the BFRR information, that is, the resource block set used to transmit the BFRR information is {RB0, RB**1**, RB2, RB3, RB10, RB11, RB12, RB13, RB20, RB21, RB22, RB23}.

### (2) Second information

The second information indicates a slot set used to transmit the BFRR information in the resource pool, and the N BFRR resources belong to the slot set in time domain.

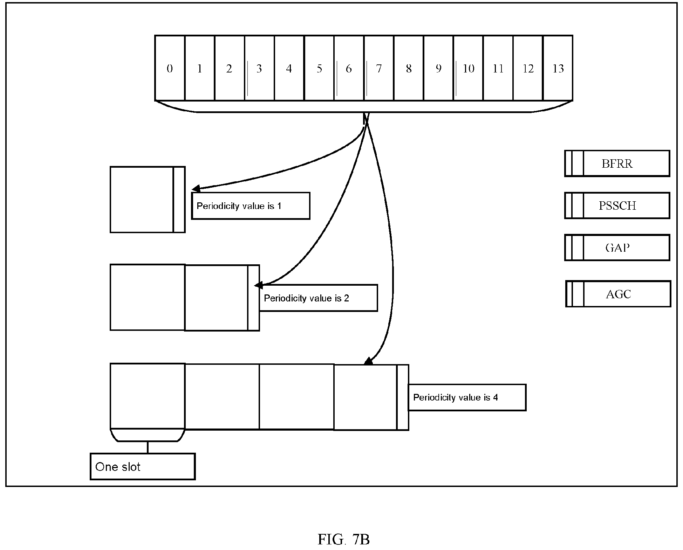

For example, the second information includes a BFRR periodicity value, and there is an interval of K-1 slots between two adjacent slots in the slot set, where K is the BFRR periodicity value (that is, a BFRR periodicity is K slots), and K is an integer greater than or equal to 1. As shown in FIG. 7B, when K is 1, it indicates that each slot in the resource pool may be used to transmit the BFRR information; when K is 2, it indicates that one slot in every two slots in the resource pool may be used to transmit the BFRR information; or when K is 4, it indicates that one slot in every four slots in the resource pool may be used to transmit the BFRR information. In each slot in the slot set, the BFRR resource may occupy a 13th symbol in the slot.

### (3) Third information

The third information indicates an association relationship between the M BFRQ resources and the N BFRR resources, and there are a plurality of specific indication manners. The following describes two possible manners: an indication manner 1 and an indication manner 2.

Indication manner 1: The third information includes time-frequency position information of the M BFRQ resources, time-frequency position information of the N BFRR resources, and information about the association relationship between the M BFRQ resources and the N BFRQ resources. For example, if the M BFRQ resources include a BFRQ resource 1 and a BFRR resource 2, and the N BFRR resources include a BFRR resource 1, the third information includes {time-frequency position information of the BFRQ resource 1, time-frequency position information of the BFRR resource 2, time-frequency position information of the BFRR resource 1}.

In this case, the first terminal apparatus or the second terminal apparatus may determine, based on the third information, positions of the N BFRQ resources associated with the M BFRQ resources, and the network apparatus may not need to send the first information or the second information to the first terminal apparatus or the second terminal apparatus.

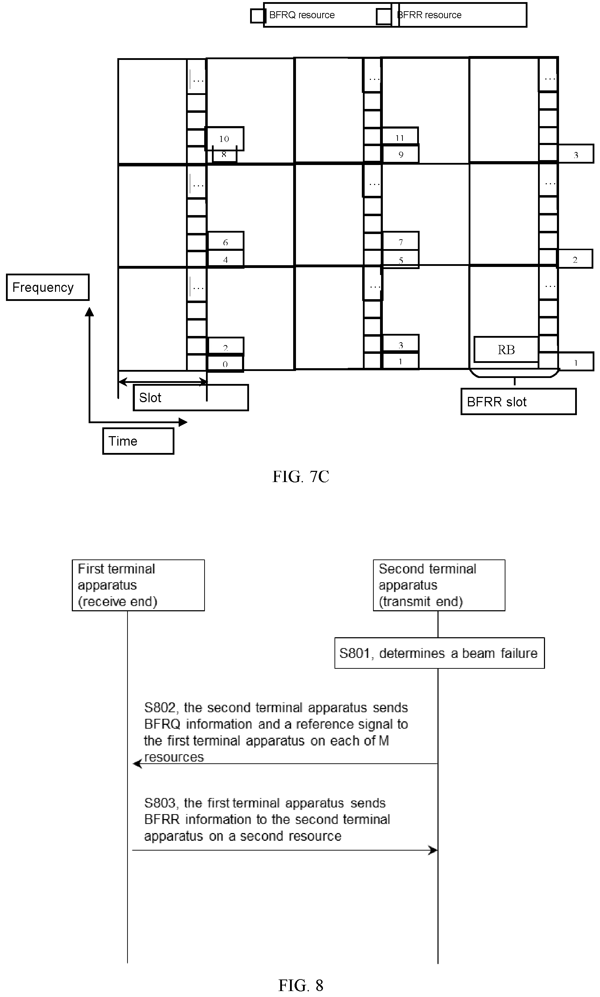

Indication manner 2: The third information includes an association rule, and the association rule is used to determine the association relationship between the M BFRQ resources and the N BFRR resources. For example, the association rule is as follows: One BFRR resource is associated with four BFRQ resources, and BFRR resources in one BFRR slot are sequentially allocated to BFRQ resources within the BFRR periodicity in an order of first time domain and then frequency domain. The BFRR slot is a slot including a BFRR resource. The BFRR resource may be configured by the network apparatus by using the first information and the second information, may be preconfigured, or may be predefined. The BFRQ resource may be configured, preconfigured, or predefined. For example, when the BFRR periodicity value is 4, BFRR resources associated with BFRQ resources in first four slots of the BFRR slot are shown in FIG. 7C. In FIG. 7C, BFRQ resources numbered 0, 1, 2, and 3 are associated with a BFRR resource numbered 1, BFRQ resources numbered 4, 5, 6, and 7 are associated with a BFRR resource numbered 2, and BFRQ resources numbered 8, 9, 10, and 11 are associated with a BFRR resource numbered 3.

In this case, the third information includes the association rule, and does not indicate a position of the BFRR resource. After determining the M BFRQ resources, the first terminal apparatus or the second terminal apparatus may determine, with reference to the association rule, the N BFRR resources associated with the M BFRQ resources.

For example, in time domain, the BFRR resource is located after the BFRQ resource associated with the BFRR resource. Table 2 is used as an example. The BFRR resource 1 is located after the BFRQ resource 1 and the BFRQ resource 2 in time domain. For example, a slot in which the BFRR resource 1 is located is located after a slot in which the BFRQ resource 1 is located, and is located after a slot in which the BFRQ resource 2 is located.

Optionally, the third information further indicates at least one of the following: the association relationship between the M reference signals (or the resources on which the reference signals are located) and the M beams, and the association relationship between the M reference signals (or the resources on which the reference signals are located) and the M BFRQ resources. For example, the third information includes information a, information b, and information c, and the information a indicates the association relationship between the M BFRQ resources and the N BFRR resources. A specific indication manner may be the foregoing indication manner 1 or indication manner 2. The information b indicates the association relationship between the M reference signals (or the resources on which the reference signals are located) and the M beams. For a specific indication manner, refer to a conventional technology. The information c indicates the association relationship between the M reference signals (or the resources on which the reference signals are located) and the M BFRQ resources. For a specific indication manner, refer to a conventional technology.

In Embodiment 1, when the indication manner 1 is used for the information a, the first terminal apparatus or the second terminal apparatus may determine the association relationship between the M BFRQ resources and the N BFRR resources based on the information a, determine the association relationship between the M reference signals and the M beams based on the information b, and determine the association relationship between the M reference signals and the M BFRQ resources based on the information c, to obtain the association relationship between the M reference signals, the M beams, the M resources, and the N resources. When the indication manner 2 is used for the information a, the first terminal apparatus or the second terminal apparatus may determine the association relationship between the M resources and the N resources based on the first information, the second information, and the information a, and then obtain the association relationship between the M reference signals, the M beams, the M resources, and the N resources with reference to the information b and the information c.

At least one of the first information, the second information, the information a, the information b, and the information c may be configured by the network apparatus, may be configured by a terminal apparatus (for example, the first terminal apparatus configures the information for the second terminal apparatus, the second terminal apparatus configures the information for the first terminal apparatus, or another terminal apparatus configures the information for the first terminal apparatus and the second terminal apparatus), may be preconfigured in the first terminal apparatus and the second terminal apparatus, or may be predefined in a protocol. When the first information, the second information, and the third information are not configured by the network apparatus, S500 may not be performed, that is, S500 is an optional step.

In addition, in this embodiment of this application, the resource granularity of the BFRR resource may be the same as the resource granularity of the sidelink feedback resource. Therefore, the following describes a relationship between the BFRR resource and the sidelink feedback resource with reference to an implementation 1 to an implementation 4.

Implementation 1: The BFRR resource is multiplexed with the sidelink feedback resource, or the BFRR resource is included in the sidelink feedback resource. For example, a slot corresponding to the BFRR resource is the same as a slot corresponding to the sidelink feedback resource, and a resource block corresponding to the BFRR resource is the same as a resource block corresponding to the sidelink feedback resource.

Implementation 2: The BFRR resource is frequency-division multiplexed with the sidelink feedback resource. For example, a slot corresponding to the BFRR resource is the same as a slot corresponding to the sidelink feedback resource, and a resource block corresponding to the BFRR resource is different from a resource block corresponding to the sidelink feedback resource. For example, refer to FIG. 7A. Resource blocks corresponding to the BFRR resource include {RB0, RB1, RB2, RB3, RB10, RB11, RB12, RB13, RB20, RB21, RB22, RB23}, and resource blocks corresponding to the sidelink feedback resource may include some or all of remaining resource blocks.

Implementation 3: The BFRR resource is time-division multiplexed with the sidelink feedback resource. For example, a slot corresponding to the BFRR resource is different from a slot corresponding to the sidelink feedback resource, and a resource block corresponding to the BFRR resource is the same as a resource block corresponding to the sidelink feedback resource. For example, slots corresponding to the sidelink feedback resource include {slot 2, slot 4, slot 6, slot 8, ...}, and slots corresponding to the sidelink feedback resource include {slot 1, slot 3, slot 5, slot **7**, ...}, or {slot 1, slot 5, slot 9, slot 11, ...}.

Implementation 4: The BFRR resource is not multiplexed with the sidelink feedback resource. For example, a slot corresponding to the BFRR resource is different from a slot corresponding to the sidelink feedback resource, and a resource block corresponding to the BFRR resource is different from a resource block corresponding to the sidelink feedback resource.

In the implementation 2 to the implementation 4, the BFRR resource is not included in the sidelink feedback resource, or the BFRR resource is a resource dedicated to transmitting the BFRR information. In addition, the "BFRR resource" in the foregoing implementation 1 to implementation 4 may alternatively be replaced with the "BFRQ resource".

S501: The first terminal apparatus determines a beam failure.

For example, before S501, the first terminal apparatus and the second terminal apparatus perform sidelink communication by using a beam a. Specifically, the second terminal apparatus sends a signal to the first terminal apparatus by using the beam a, and correspondingly, the first terminal apparatus receives the signal by using the beam a. In other words, the second terminal apparatus is a transmit end, and the first terminal apparatus is a receive end. In a process of communication between the first terminal apparatus and the second terminal apparatus, due to movement of the first terminal apparatus or the second terminal apparatus and a change of a channel condition, a channel condition of an originally selected beam (that is, the beam a) of the first terminal apparatus and the second terminal apparatus may deteriorate, resulting in deterioration of communication performance. Therefore, the first terminal apparatus may determine the beam failure.

There are a plurality of manners in which the first terminal apparatus determines the beam failure. This is not limited in embodiments of this application. For example, if the first terminal apparatus does not receive information periodically sent by the second terminal apparatus, the first terminal apparatus may determine the beam failure. For another example, if the first terminal apparatus determines that a quantity of consecutive failures in receiving sidelink data (or decoding failures or demodulation failures) reaches a first threshold, the first terminal apparatus may determine the beam failure. The first threshold may be configured by the network apparatus, preconfigured, or predefined. For another example, if the first terminal apparatus determines that a proportion of sidelink positive feedback to feedback that needs to be received is less than a second threshold, the first terminal apparatus determines the beam failure.

S502: The first terminal apparatus sends the BFRQ information to the second terminal apparatus on a first resource in the M resources, and correspondingly, the second terminal apparatus receives the BFRQ information on the first resource.

For example, after determining an optimal beam from the M beams as the beam 2, the first terminal apparatus may determine, based on the association relationship (as shown in Table 2) between the M beams and the M resources, that a BFRQ resource associated with the optimal beam is the BFRQ resource 2 (that is, the first resource), and then send the BFRQ information to the second terminal apparatus on the first resource by using the optimal beam. Correspondingly, the second terminal apparatus attempts, based on the association relationship (as shown in Table 2) between the M beams and the M resources, to receive the BFRQ information on the M resources by using the M beams. For example, the second terminal apparatus attempts to receive the BFRQ information on the BFRQ resource 1 by using the beam 1, and attempts to receive the BFRQ information on the BFRQ resource 2 by using the beam 2. Because the first terminal apparatus sends the BFRQ information on the first resource, the second terminal apparatus may receive the BFRQ information on the BFRQ resource 2 by using the beam 2, so that the second terminal apparatus may learn that the optimal beam determined by the first terminal apparatus is the beam 2.

A process in which the first terminal apparatus determines the optimal beam may be as follows: The second terminal apparatus sends the M reference signals by using the M beams based on the association relationship (as shown in Table 2) between the M reference signals and the M beams. For example, the terminal apparatus A sends the reference signal 1 by using the beam 1, and sends the reference signal 2 by using the beam 2. Correspondingly, the first terminal apparatus attempts to receive the M reference signals by using the M beams based on the association relationship (as shown in Table 2) between the M reference signals and the M beams. For example, the first terminal apparatus attempts to receive the reference signal 1 on a corresponding resource by using the beam 1, and attempts to receive the reference signal 2 on a corresponding resource by using the beam 2. Further, the first terminal apparatus may determine the optimal beam from the M beams based on reception quality of the received M reference signals. For example, if the reference signal 2 in the M reference signals has highest reception quality, the first terminal apparatus may use a beam (that is, the beam 2) associated with the reference signal 2 as the optimal beam.

It may be understood that the first terminal apparatus may determine the optimal beam before S501, may determine the optimal beam after S501, or may determine the optimal beam at the same time with S501.

S503: The second terminal apparatus sends the BFRR information to the first terminal apparatus on a second resource in the N resources, and correspondingly, the first terminal apparatus receives the BFRR information on the second resource.

For example, after receiving the BFRQ information on the first resource in the M resources, the second terminal apparatus may determine, based on the association relationship (as shown in Table 2) between the M resources and the N resources, that the first resource is associated with the second resource in the N resources, and then send the BFRR information on the second resource. For example, the first resource is the BFRQ resource 2. After receiving the BFRQ information on the BFRQ resource 2 by using the beam 2, the second terminal apparatus may send, by using the beam 2, the BFRR information on the BFRR resource 1 associated with the BFRQ resource 2, and correspondingly, the first terminal apparatus receives the BFRR information on the BFRR resource 1 by using the beam 2, to complete beam recovery. Subsequently, the first terminal apparatus and the second terminal apparatus may communicate with each other by using the optimal beam (that is, the beam 2).

In the foregoing method, one BFRR resource may be associated with at least two BFRQ resources. In comparison with "the BFRQ resource is associated with the BFRR resource in a one-to-one manner", a quantity of BFRQ resources can be reduced, so that resource overhead needed for beam failure recovery can be reduced, and a proportion of resources that can be used for data transmission is increased. Further, optionally, the BFRR resource includes one resource block in frequency domain and one symbol in time domain. To be specific, the resource granularity of the BFRR resource is the same as the resource granularity of the sidelink feedback resource. In comparison with "the resource granularity of the BFRR resource may be the same as the resource granularity of the sidelink data resource", resource overhead of a single BFRQ resource can be reduced, so that resource overhead needed for beam failure recovery can be reduced, and a proportion of resources that can be used for data transmission is increased.

### Embodiment 2

FIG. 8 is a schematic flowchart corresponding to a communication method according to an embodiment of this application. As shown in FIG. 8, the method includes the following steps.

S801: A second terminal apparatus determines a beam failure.

For example, before S801, a first terminal apparatus and the second terminal apparatus perform sidelink communication by using a beam a. Specifically, the second terminal apparatus sends a signal to the first terminal apparatus by using the beam a, and correspondingly, the first terminal apparatus receives the signal by using the beam a. In other words, the second terminal apparatus is a transmit end, and the first terminal apparatus is a receive end. In a process of communication between the first terminal apparatus and the second terminal apparatus, due to movement of the first terminal apparatus or the second terminal apparatus and a change of a channel condition, a channel condition of an originally selected beam (that is, the beam a) of the first terminal apparatus and the second terminal apparatus may deteriorate, resulting in deterioration of communication performance. Therefore, the second terminal apparatus may determine the beam failure.

There are a plurality of manners in which the second terminal apparatus determines the beam failure. For example, if the second terminal apparatus continuously sends a plurality of pieces of sidelink data to the first terminal apparatus by using the beam a, but does not receive corresponding sidelink feedback data, that is, a quantity of consecutive failures in receiving the sidelink feedback data reaches a third threshold, the second terminal apparatus may determine the beam failure. The third threshold may be configured by a network apparatus, preconfigured, or predefined.

S802: The second terminal apparatus sends BFRQ information and a reference signal to the first terminal apparatus on each of M resources, and correspondingly, the first terminal apparatus receives the BFRQ information and the reference signal on each of the M resources.
(1) Information transmitted on the M resources is described.

Each of the M resources may be used to transmit the BFRQ information and the reference signal. In other words, the resource is a resource on which the BFRQ information and the reference signal are located. For ease of description, the resource may be referred to as a BFRQ resource or another name for short. A name is not limited in embodiments of this application. "M BFRQ resources" are used as an example below. Optionally, each of the M BFRQ resources may be further used to transmit sidelink data.

A resource granularity of the BFRQ resource may be the same as a resource granularity of the sidelink data resource. For example, the BFRQ resource includes one slot in time domain and one or more sub-channels in frequency domain.

For example, the BFRQ resource is shown in FIG. 2A. The BFRQ information transmitted on the BFRQ resource may be carried on a PSCCH. For example, a field is added to sidelink control information of the PSCCH, and the field includes the BFRQ information. Alternatively, the BFRQ information may be carried on a PSSCH. For example, a MAC CE of the PSSCH indicates that the MAC CE is the BFRQ information. In addition, the reference signal transmitted on the BFRQ resource may be a PSSCH reference signal, for example, a DMRS.

(2) An implementation in which the second terminal apparatus determines the M BFRQ resources is described.

For example, the M BFRQ resources may be resources independently selected by the second terminal apparatus based on a listening result of the second terminal apparatus, or may be resources selected by the second terminal apparatus based on assistance of the first terminal apparatus. The specific implementation in which the second terminal apparatus determines the M BFRQ resources is not limited in embodiments of this application. This is different from "the M resources are configured by the network apparatus, preconfigured, or predefined" in Embodiment 1.

For example, after the second terminal apparatus determines the beam failure, if the second terminal apparatus has M beams, the second terminal apparatus may determine to determine the M BFRQ resources from a resource pool. The resource pool may be configured by the network apparatus, preconfigured, or predefined.

The M BFRQ resources are associated with the M beams in a one-to-one manner. For example, the M beams include a beam 1 and a beam 2, the beam 1 is associated with a BFRQ resource 1, and the beam 2 is associated with a BFRQ resource 2. In addition, because only one beam can be usually used for sending or receiving in one slot, when determining the M BFRQ resources from the resource pool, the second terminal apparatus needs to ensure that the M BFRQ resources are located in different slots.

The M BFRQ resources are associated with the M beams in a plurality of manners. For example, the M BFRQ resources may be associated with the M beams in a one-to-one manner according to an order of the M BFRQ resources in time domain. The association manner may be configured by the network apparatus or the terminal apparatus, may be preconfigured, or may be predefined. Optionally, a periodic time window may be configured, preconfigured, or predefined. The M BFRQ resources fall in the time window, and the M BFRQ resources are in one-to-one correspondence with the M beams.

(3) A specific implementation of S802 is described.

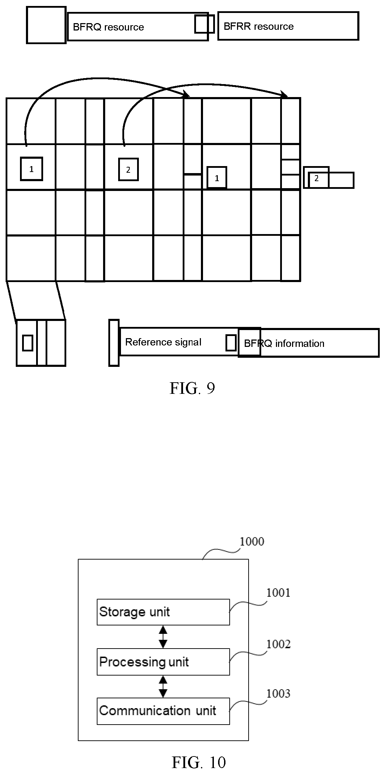

For example, as shown in FIG. 9, the second terminal apparatus may send BFRQ information 1 and a reference signal 1 on a BFRQ resource 1 by using a beam 1, and send BFRQ information 2 and a reference signal 2 on a BFRQ resource 2 by using a beam 2. It may be understood that beams used by the second terminal apparatus to send the BFRQ information and the reference signal on different BFRQ resources are different, but the sent BFRQ information and reference signal may be the same.

Correspondingly, the first terminal apparatus may determine a first resource from the M resources based on reception quality of a reference signal on the M BFRQ resources. Specifically, after the first terminal apparatus receives the BFRQ information 1 and the reference signal 1 on the BFRQ resource 1, and receives the BFRQ information 2 and the reference signal 2 on the BFRQ resource 2, the first terminal apparatus learns, based on the BFRQ information 1 and the BFRQ information 2, that the second terminal apparatus initiates beam failure recovery, so that the first terminal apparatus can determine the first resource from the M BFRQ resources based on reception quality of the reference signal 1 and the reference signal 2. For example, if the reference signal 2 has highest reception quality, the first terminal apparatus may determine that a resource (that is, the BFRQ resource 2) on which the reference signal 2 is located is the first resource, and a beam (that is, the beam 2) associated with the first resource is an optimal beam.

S803: The first terminal apparatus sends BFRR information to the second terminal apparatus on a second resource, and correspondingly, the second terminal apparatus receives the BFRR information from the first terminal apparatus on the second resource.

Assuming that in S802, the first terminal apparatus determines that the BFRQ resource 2 is the first resource, and the beam 2 associated with the BFRQ resource 2 is the optimal beam. In S803, the first terminal apparatus may determine, based on an association relationship (as shown in Table 3) between the BFRQ resource and the BFRF resource, that a BFRR resource associated with the BFRQ resource 2 is the second resource, and then send the BFRR information on the second resource by using the beam 2. Correspondingly, the second terminal apparatus may receive the BFRR information on the second resource by using the beam 2, to complete beam recovery. Subsequently, the first terminal apparatus and the second terminal apparatus may communicate with each other by using the optimal beam (that is, the beam 2).

**Table 3: Example of association relationships between M BFRQ resources, M beams, and M BFRR resources**

| M BFRQ resources | M beams | M resources |
|---|---|---|
| BFRQ resource 1 (reference signal 1 and BFRQ information 1) | Beam 1 | BFRR resource 1 |
| BFRQ resource 2 (reference signal 2 and BFRQ information 2) | Beam 2 | BFRR resource 2 |

For example, a resource granularity of the second resource may be the same as a resource granularity of a sidelink feedback resource. For example, the second resource includes one symbol in time domain (where a symbol preceding the symbol is an AGC symbol, and a symbol following the symbol is a GAP symbol) and one resource block in frequency domain.

In a possible implementation, the first resource is included in the sidelink data resource, and the second resource is included in the sidelink feedback resource. In this case, for an association relationship between the first resource and the second resource, refer to a conventional technology.

In another possible implementation, the first resource is included in the sidelink data resource, and the second resource is included in a resource dedicated to transmitting the BFRR information (for example, the second resource is frequency-division multiplexed with the sidelink feedback resource, the second resource is time-division multiplexed with the sidelink feedback resource, or the second resource is not multiplexed with the sidelink feedback resource). For details, refer to Embodiment 1. In this case, an association relationship between the first resource and the second resource may be configured by the network apparatus, preconfigured, or predefined.

For example, BFRR resources associated with the M BFRQ resources may be located in different slots. For example, when the second terminal apparatus selects the M BFRQ resources, a time domain interval between two adjacent BFRQ resources needs to be greater than or equal to K slots, where K is a BFRR periodicity value, to ensure that the BFRR resources associated with the M BFRQ resources may be located in different slots. For example, if the BFRR periodicity value is 2, the time domain interval between two adjacent BFRQ resources in the M BFRQ resources needs to be greater than or equal to two slots. A reason is as follows: After sending the BFRQ information and the reference signal on each of the M BFRQ resources, the second terminal apparatus may attempt, by using beams associated with the M BFRQ resources, to receive the BFRR information on the BFRR resources associated with the M BFRQ resources. For example, the second terminal apparatus attempts to receive the BFRR information on the BFRR resource 1 (where the BFRR resource 1 is associated with the BFRQ resource 1) by using the beam 1, and attempts to receive the BFRR information on the BFRR resource 2 (where the BFRR resource 2 is associated with the BFRQ resource 2) by using the beam 2. Generally, only one beam can be used for sending or receiving in one slot. If the BFRR resource 1 and the BFRR resource 2 are located in a same slot, the second terminal apparatus does not know which beam is used for receiving in the slot.

For example, the BFRR resources associated with the M BFRQ resources are located after the M BFRQ resources in time domain. For example, if the BFRQ resource 1 is associated with the BFRR resource 1, and the BFRQ resource 2 is associated with the BFRR resource 2, the BFRR resource 1 is located after the BFRQ resource 1 and the BFRQ resource 2 in time domain, and the BFRR resource 2 is located after the BFRQ resource 1 and the BFRQ resource 2 in time domain. A reason is as follows: After receiving M pieces of BFRQ information and M reference signals on the M BFRQ resources, the first terminal apparatus sends, based on reception quality of the M reference signals, the BFRR information on a BFRR resource associated with one of the M BFRQ resources. Therefore, the BFRR resources associated with the M BFRQ resources need to be located after the M BFRQ resources in time domain.

According to the foregoing method, the second terminal apparatus may send the BFRQ information and the reference signal on the BFRQ resource, and correspondingly, the first terminal apparatus may feed back the BFRR information on the corresponding BFRR resource based on reception quality of a plurality of reference signals, that is, "the BFRQ resource is associated with the BFRR resource in a one-to-one manner". In comparison with a manner in which "the resource on which the reference signal is located, the BFRQ resource, and the BFRR resource are associated in a one-to-one manner", resource overhead needed for beam failure recovery can be reduced, and a proportion of resources that can be used for data transmission is increased. Further, the BFRQ resource in this embodiment may be used to transmit sidelink data, so that resource use flexibility can be improved, and a proportion of resources that can be used for data transmission is increased.

For the foregoing embodiments, it may be understood that:
(1) The foregoing focuses on a difference between different embodiments, different implementations, or different examples. For content other than the difference, reference may be made between different embodiments, different implementations, or different examples. In addition, different embodiments, different implementations, or different examples may be partially implemented, may be combined for implementation, or may be partially combined for implementation. Details are not listed one by one in embodiments of this application.
(2) The step numbers in each flowchart described in the foregoing embodiments are merely a procedure execution example, and do not constitute a limitation on a step execution order. In embodiments of this application, there may be no strict execution order between steps having no time sequence dependence relationship with each other. In addition, not all the steps shown in the flowcharts are mandatory steps. Some steps may be added or deleted based on the flowcharts according to an actual requirement, or only some steps included in the flowcharts may be performed.

The foregoing describes the solutions provided in embodiments of this application mainly from a perspective of interaction between apparatuses. It can be understood that, to implement the foregoing functions, each apparatus may include corresponding hardware structures and/or software modules for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the first terminal apparatus and the second terminal apparatus each may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

When the integrated unit is used, FIG. 10 is a possible example block diagram of an apparatus according to an embodiment of this application. As shown in FIG. 10, the apparatus 1000 may include a processing unit 1002 and a communication unit 1003. The processing unit 1002 is configured to control and manage an action of the apparatus 1000. The communication unit 1003 is configured to support communication between the apparatus 1000 and another device. Optionally, the communication unit 1003 is also referred to as a transceiver unit, and may include a receiving unit and/or a sending unit, respectively configured to perform a receiving operation and a sending operation. The apparatus 1000 may further include a storage unit 1001, configured to store program code and/or data of the apparatus 1000.
(1) The apparatus 1000 may be the first terminal apparatus in the foregoing embodiments. The processing unit 1002 may support the apparatus 1000 in performing actions of the first terminal apparatus in the foregoing method examples. Alternatively, the processing unit 1002 mainly performs internal actions of the first terminal apparatus in the method examples, and the communication unit 1003 may support communication between the apparatus 1000 and another device.

(1.1) In an embodiment, the processing unit 1002 is configured to determine a beam failure; and the communication unit 1003 is configured to: send beam failure recovery request information to a second terminal apparatus on a first resource in M resources, where the M resources are associated with M reference signals in a one-to-one manner, the first resource is determined from the M resources based on reception quality of the M reference signals, and the M resources are used to transmit the beam failure recovery request information; and receive beam failure recovery response information from the second terminal apparatus on a second resource in N resources, where the N resources are used to transmit the beam failure recovery response information, the second resource is associated with at least two resources in the M resources, and the at least two resources include the first resource.

In a possible design, the processing unit 1002 is specifically configured to: if it is determined that information periodically sent by the second terminal apparatus is not received, determine the beam failure; or if it is determined that a quantity of consecutive failures in receiving sidelink data reaches a first threshold, determine the beam failure.

In a possible design, the communication unit 1003 is further configured to communicate with the second terminal apparatus by using a beam associated with the first resource.

In a possible design, the second resource includes one symbol in time domain and one resource block in frequency domain.

In a possible design, the communication unit 1003 is further configured to receive first information from a network apparatus, where the first information indicates a resource block set used to transmit the beam failure recovery response information in a resource pool, and the N resources belong to the resource block set in frequency domain.

In a possible design, the first information includes a bitmap, each bit position in the bitmap corresponds to one resource block in the resource pool, and a value of each bit position indicates whether the resource block corresponding to each bit position is used to transmit the beam failure recovery response information.

In a possible design, the communication unit 1003 is further configured to receive second information from the network apparatus, where the second information indicates a slot set used to transmit the beam failure recovery response information in the resource pool, and the N resources belong to the slot set in time domain.

In a possible design, the second information includes a periodicity value, and there is an interval of K-1 slots between two adjacent slots in the slot set, where K is the periodicity value.

In a possible design, the communication unit 1003 is further configured to receive third information from the network apparatus, where the third information indicates an association relationship between the M resources and the N resources.

In a possible design, an association relationship between the M resources and the N resources is predefined or preconfigured.

In a possible design, the second resource is frequency-division multiplexed with a sidelink feedback resource.

In a possible design, the second resource and the sidelink feedback resource are located in different slots.

In a possible design, the second resource is located after the at least two resources in time domain.

(1.2) In another embodiment, the communication unit 1003 is configured to: receive, on each of M resources, beam failure recovery request information and a reference signal from the first terminal apparatus; and send beam failure recovery response information to the first terminal apparatus on a second resource, where the second resource is associated with a first resource in the M resources, and the first resource is determined by the first terminal apparatus from the M resources based on reception quality of a reference signal on the M resources.

In a possible design, the communication unit 1003 is further configured to communicate with the second terminal apparatus by using a beam associated with the first resource.

In a possible design, resources associated with the M resources are located in different slots.

In a possible design, the first resource is further used to transmit sidelink data.

In a possible design, the beam failure recovery request information is carried on a physical sidelink control channel, or the beam failure recovery request information is carried on a physical sidelink shared channel.

In a possible design, the second resource is included in a physical sidelink feedback channel resource; or the second resource is dedicated to transmitting the beam failure recovery response information.

In a possible design, an association relationship between the second resource and the first resource is configured by a network apparatus, preconfigured, or predefined.

(2) The apparatus 1000 may be the second terminal apparatus in the foregoing embodiments. The processing unit 1002 may support the apparatus 1000 in performing actions of the second terminal apparatus in the foregoing method examples. Alternatively, the processing unit 1002 mainly performs internal actions of the second terminal apparatus in the method examples, and the communication unit 1003 may support communication between the apparatus 1000 and another device.

(2.1) In an embodiment, the communication unit 1003 is configured to: send M reference signals; and receive, on a first resource in M resources, beam failure recovery request information from the second terminal apparatus, where the M resources are associated with the M reference signals in a one-to-one manner, the first resource is determined from the M resources based on reception quality of the M reference signals, and the M resources are used to transmit the beam failure recovery request information; and send beam failure recovery response information to the second terminal apparatus on a second resource in N resources, where the N resources are used to transmit the beam failure recovery response information, the second resource is associated with at least two resources in the M resources, and the at least two resources include the first resource.

In a possible design, the communication unit 1003 is configured for the second terminal apparatus to communicate with the first terminal apparatus by using a beam associated with the first resource.

In a possible design, the second resource includes one symbol in time domain and one resource block in frequency domain.

In a possible design, the communication unit 1003 is further configured to receive first information from a network apparatus, where the first information indicates a resource block set used to transmit the beam failure recovery response information in a resource pool, and the N resources belong to the resource block set in frequency domain.

In a possible design, the first information includes a bitmap, each bit position in the bitmap corresponds to one resource block in the resource pool, and a value of each bit position indicates whether the resource block corresponding to each bit position is used to transmit the beam failure recovery response information.

In a possible design, the communication unit 1003 is further configured to receive second information from the network apparatus, where the second information indicates a slot set used to transmit the beam failure recovery response information in the resource pool, and the N resources belong to the slot set in time domain.

In a possible design, the second information includes a periodicity value, and there is an interval of K-1 slots between two adjacent slots in the slot set, where K is the periodicity value.

In a possible design, the communication unit 1003 is further configured to receive third information from the network apparatus, where the third information indicates an association relationship between the M resources and the N resources.

In a possible design, an association relationship between the M resources and the N resources is predefined or preconfigured.

In a possible design, the second resource is frequency-division multiplexed with a sidelink feedback resource.

In a possible design, the second resource and the sidelink feedback resource are located in different slots.

In a possible design, the second resource is located after the at least two resources in time domain.

(2.2) In another embodiment, the processing unit 1002 is configured to determine a beam failure; and the communication unit 1003 is configured to: send beam failure recovery request information and a reference signal to a first terminal apparatus on each of M resources; and the second terminal apparatus receives, on a second resource, beam failure recovery response information from the first terminal apparatus, where the second resource is associated with a first resource in the M resources, and the first resource is determined by the first terminal apparatus from the M resources based on reception quality of a reference signal on the M resources.

In a possible design, the processing unit 1002 is specifically configured to: if it is determined that a quantity of consecutive failures in receiving sidelink feedback data reaches a third threshold, determine the beam failure.

In a possible design, the communication unit 1003 is further configured to communicate with the first terminal apparatus by using a beam associated with the first resource.

In a possible design, the processing unit 1002 is specifically configured to determine a plurality of resources from a resource pool, where the plurality of resources are located in different slots.

In a possible design, resources associated with the M resources are located in different slots.

In a possible design, the first resource is further used to transmit sidelink data.

In a possible design, the beam failure recovery request information is carried on a physical sidelink control channel, or the beam failure recovery request information is carried on a physical sidelink shared channel.

In a possible design, the second resource is included in a physical sidelink feedback channel resource; or the second resource is dedicated to transmitting the beam failure recovery response information.

In a possible design, an association relationship between the second resource and the first resource is configured by a network apparatus, preconfigured, or predefined.

It should be understood that division of the units in the foregoing apparatus is merely logical function division. During actual implementation, all or some of the units may be integrated into one physical entity, or may be physically separated. In addition, all the units in the apparatus may be implemented in a form of software invoked by a processing element, or may be implemented in a form of hardware; or some units may be implemented in a form of software invoked by a processing element, and some units may be implemented in a form of hardware. For example, each unit may be a separately disposed processing element, or may be integrated into a chip of the apparatus for implementation. In addition, each unit may alternatively be stored in a memory in a form of a program to be invoked by a processing element of the apparatus to perform a function of the unit. In addition, all or some of the units may be integrated together, or may be implemented independently. The processing element herein may also be referred to as a processor, and may be an integrated circuit having a signal processing capability. In an implementation procedure, operations in the foregoing methods or the foregoing units may be implemented by using a hardware integrated logic circuit in the processor element or may be implemented in a form in which the processing element invokes software.

In an example, a unit in any one of the foregoing apparatuses may be one or more integrated circuits configured to implement the foregoing methods, for example, one or more application-specific integrated circuits (application-specific integrated circuit, ASIC), one or more digital signal processors (digital signal processor, DSP), one or more field programmable gate arrays (field programmable gate array, FPGA), or a combination of at least two of these forms of integrated circuits. In another example, when the units in the apparatus may be implemented in a form in which a processing element schedules a program, the processing element may be a processor, for example, a general-purpose central processing unit (central processing unit, CPU) or another processor that can invoke the program. In another example, the units may be integrated and implemented in a form of a system-on-a-chip (system-on-a-chip, SoC).

The foregoing unit configured for receiving is an interface circuit of the apparatus, and is configured to receive a signal from another apparatus. For example, when the apparatus is implemented in a manner of a chip, the receiving unit is an interface circuit that is of the chip and that is configured to receive a signal from another chip or apparatus. The foregoing unit configured for sending is an interface circuit of the apparatus, and is configured to send a signal to another apparatus. For example, when the apparatus is implemented in a manner of a chip, the sending unit is an interface circuit that is of the chip and that is configured to send a signal to another chip or apparatus.

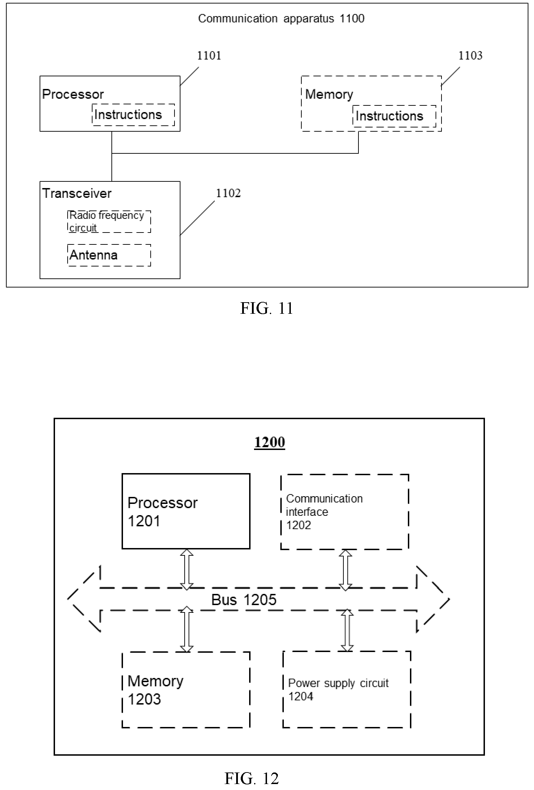

In another possible product form, the terminal apparatus in embodiments of this application may be implemented by using a general bus architecture. For ease of description, FIG. 11 is a diagram of a structure of a communication apparatus 1100 according to an embodiment of this application. The communication apparatus 1100 includes a processor 1101 and a transceiver 1102. The communication apparatus 1100 may be a first terminal apparatus, or a chip or a chip system in the first terminal apparatus. FIG. 11 shows only main components of the communication apparatus 1100. In addition to the processor 1101 and the transceiver 1102, the communication apparatus 1100 may further include a memory 1103 and an input/output apparatus (not shown in the figure).

Optionally, the processor 1101 is mainly configured to: process a communication protocol and communication data, control the entire communication apparatus, execute a software program, and process data of the software program. The memory 1103 is mainly configured to store the software program and data. The transceiver 1102 may include a radio frequency circuit and an antenna. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to: receive data input by a user and output data to the user.

Optionally, the processor 1101, the transceiver 1102, and the memory 1103 may be connected through a communication bus.

When the communication apparatus is powered on, the processor 1101 may read the software program in the memory 1103, interpret and execute instructions of the software program, and process the data of the software program. When data needs to be sent in a wireless manner, the processor 1101 performs baseband processing on to-be-sent data, and then outputs a baseband signal to the radio frequency circuit. The radio frequency circuit performs radio frequency processing on the baseband signal, and then sends a radio frequency signal in an electromagnetic wave form through the antenna. When data is sent to the communication apparatus, the radio frequency circuit receives a radio frequency signal by using the antenna, converts the radio frequency signal into a baseband signal, and outputs the baseband signal to the processor 1101. The processor 1101 converts the baseband signal into data, and processes the data.

In another implementation, the radio frequency circuit and the antenna may be disposed independent of the processor that performs baseband processing. For example, in a distributed scenario, the radio frequency circuit and the antenna may be disposed remotely and independent of the communication apparatus.

In some embodiments, in terms of hardware implementation, a person skilled in the art may figure out that the communication apparatus 1000 may be in a form of the communication apparatus 1100 shown in FIG. 11.

In an example, a function/implementation process of the processing unit 1002 in FIG. 10 may be implemented, by invoking computer-executable instructions stored in the memory 1103, by using the processor 1101 in the communication apparatus 1100 shown in FIG. 11. A function/implementation process of the communication unit 1003 in FIG. 10 may be implemented by using the transceiver 1102 in the communication apparatus 1100 shown in FIG. 11.

In another possible product form, the terminal apparatus in this application may use a composition structure shown in FIG. 12, or include components shown in FIG. 12. FIG. 12 is a diagram of composition of a communication apparatus 1200 according to this application.

As shown in FIG. 12, the communication apparatus 1200 includes at least one processor 1201. Optionally, the communication apparatus further includes a communication interface 1202.

When related program instructions are executed in the at least one processor 1201, the apparatus 1200 may be caused to implement the method provided in any one of the foregoing embodiments and any possible design thereof. Alternatively, the processor 1201 is configured to implement, by using a logic circuit or by executing code instructions, the method provided in any one of the foregoing embodiments and any possible design thereof.

The communication interface 1202 may be configured to receive the program instructions and transmit the program instructions to the processor. Alternatively, the communication interface 1202 may be configured to perform communication interaction between the communication apparatus 1200 and another communication device, for example, exchange control signaling and/or service data. For example, the communication interface 1202 may be configured to receive a signal from an apparatus other than the communication apparatus 1200, and transmit the signal to the processor 1201; or send a signal from the processor 1201 to a communication apparatus other than the communication apparatus 1200.

Optionally, the communication interface 1202 may be a code and/or data read/write interface circuit, or the communication interface 1202 may be a signal transmission interface circuit between a communication processor and a transceiver, or may be a pin of a chip.

Optionally, the communication apparatus 1200 may further include at least one memory 1203, and the memory 1203 may be configured to store the related program instructions and/or data that are/is required. It should be noted that the memory 1203 may exist independently of the processor 1201, or may be integrated with the processor 1201. The memory 1203 may be located inside the communication apparatus 1200, or may be located outside the communication apparatus 1200. This is not limited.

Optionally, the communication apparatus 1200 may further include a power supply circuit 1204, and the power supply circuit 1204 may be configured to supply power to the processor 1201. The power supply circuit 1204 may be located in a same chip as the processor 1201, or may be located in a chip other than a chip in which the processor 1201 is located.

Optionally, the communication apparatus 1200 may further include a bus 1205, and parts of the communication apparatus 1200 may be interconnected through the bus 1205.

In some embodiments, in terms of hardware implementation, a person skilled in the art may figure out that the communication apparatus 1000 shown in FIG. 10 may be in a form of the communication apparatus 1200 shown in FIG. 12.

In an example, a function/implementation process of the processing unit 1002 in FIG. 10 may be implemented, by invoking computer-executable instructions stored in the memory 1203, by using the processor 1201 in the communication apparatus 1200 shown in FIG. 12. A function/implementation process of the communication unit 1003 in FIG. 10 may be implemented by using the communication interface 1202 in the communication apparatus 1200 shown in FIG. 12.

It should be noted that the structure shown in FIG. 12 does not constitute a specific limitation on the terminal apparatus. For example, in some other embodiments of this application, the terminal apparatus may include more or fewer components than those shown in the figure, or combine some components, or split some components, or have different component arrangements. The components shown in the figure may be implemented by hardware, software, or a combination of software and hardware.

Optionally, the processor in this application may be a CPU, or may be another general-purpose processor, a DSP, an ASIC, an FPGA, or another programmable logic device, a discrete gate or transistor logic device, a discrete hardware component, or the like. The general-purpose processor may be a microprocessor, or the processor may be any conventional processor or the like.

The terms "system" and "network" may be used interchangeably in embodiments of this application. "At least one" means one or more, and "a plurality of" means two or more. The term "and/or" describes an association relationship of associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects. At least one of the following items (pieces) or a similar expression thereof indicates any combination of these items, including a single item (piece) or any combination of a plurality of items (pieces). For example, "at least one of A, B, or C" includes A, B, C, AB, AC, BC, or ABC, and "at least one of A, B, and C" may also be understood as including A, B, C, AB, AC, BC, or ABC. In addition, unless otherwise specified, ordinal numbers such as "first" and "second" in embodiments of this application are used to distinguish between a plurality of objects, and are not used to limit a sequence, a time sequence, priorities, or importance of the plurality of objects.

A person skilled in the art should understand that embodiments of this application may be provided as a method, a system, or a computer program product. Therefore, this application may use a form of hardware only embodiments, software only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

## Claims

1. A communication method, wherein the method is applied to a first terminal apparatus, and the method comprises:
determining a beam failure;
sending beam failure recovery request information to a second terminal apparatus on a first resource in M resources, wherein the M resources are associated with M reference signals in a one-to-one manner, the first resource is determined from the M resources based on reception quality of the M reference signals, and the M resources are used to transmit the beam failure recovery request information; and
receiving beam failure recovery response information from the second terminal apparatus on a second resource in N resources, wherein the N resources are used to transmit the beam failure recovery response information, the second resource is associated with at least two resources in the M resources, and the at least two resources comprise the first resource.

2. The method according to claim 1, wherein the determining the beam failure comprises:
if it is determined that information periodically sent by the second terminal apparatus is not received, determining the beam failure; or
if it is determined that a quantity of consecutive failures in receiving sidelink data reaches a first threshold, determining the beam failure.

3. The method according to claim 1 or 2, wherein the method further comprises:
communicating with the second terminal apparatus by using a beam associated with the first resource.

4. A communication method, wherein the method is applied to a second terminal apparatus, and the method comprises:
sending M reference signals;
receiving, on a first resource in M resources, beam failure recovery request information from the second terminal apparatus, wherein the M resources are associated with the M reference signals in a one-to-one manner, the first resource is determined from the M resources based on reception quality of the M reference signals, and the M resources are used to transmit the beam failure recovery request information; and
sending beam failure recovery response information to the second terminal apparatus on a second resource in N resources, wherein the N resources are used to transmit the beam failure recovery response information, the second resource is associated with at least two resources in the M resources, and the at least two resources comprise the first resource.

5. The method according to claim 4, wherein the method further comprises:
communicating with the first terminal apparatus by using a beam associated with the first resource.

6. The method according to any one of claims 1 to 5, wherein the second resource comprises one symbol in time domain and one resource block in frequency domain.

7. The method according to any one of claims 1 to 6, wherein the method further comprises:
receiving first information from a network apparatus, wherein the first information indicates a resource block set used to transmit the beam failure recovery response information in a resource pool, and the N resources belong to the resource block set in frequency domain.

8. The method according to claim 7, wherein the first information comprises a bitmap, each bit position in the bitmap corresponds to one resource block in the resource pool, and a value of each bit position indicates whether the resource block corresponding to each bit position is used to transmit the beam failure recovery response information.

9. The method according to any one of claims 1 to 8, wherein the method further comprises:
receiving second information from the network apparatus, wherein the second information indicates a slot set used to transmit the beam failure recovery response information in the resource pool, and the N resources belong to the slot set in time domain.

10. The method according to claim 9, wherein the second information comprises a periodicity value, and there is an interval of K-1 slots between two adjacent slots in the slot set, wherein K is the periodicity value.

11. The method according to any one of claims 1 to 10, wherein the method further comprises:
receiving third information from the network apparatus, wherein the third information indicates an association relationship between the M resources and the N resources.

12. The method according to any one of claims 1 to 10, wherein an association relationship between the M resources and the N resources is predefined or preconfigured.

13. The method according to any one of claims 1 to 12, wherein the second resource is frequency-division multiplexed with a sidelink feedback resource; or the second resource and the sidelink feedback resource are located in different slots.

14. The method according to any one of claims 1 to 13, wherein the second resource is located after the at least two resources in time domain.

15. A communication apparatus, comprising a unit configured to perform the method according to any one of claims 1 to 14.

16. A communication apparatus, comprising a processor, wherein the processor is coupled to a memory, and the memory stores a computer program; and the processor is configured to invoke the computer program in the memory, to cause the method according to any one of claims 1 to 14 to be performed.

17. A computer-readable storage medium, wherein the storage medium stores a computer program or instructions, and when the computer program or the instructions are executed by a computer, the method according to any one of claims 1 to 14 is performed.

18. A computer program product, wherein when a computer reads and executes the computer program product, the method according to any one of claims 1 to 14 is performed.
